# EUROPÄISCHE PATENTSCHRIFT

(11) **EP 3 976 539 B1**
(45) Veröffentlichungstag und Bekanntmachung des Hinweises auf die Patenterteilung: **06.05.2026**
(21) Anmeldenummer: 20716800.6
(22) Anmeldetag: 07.04.2020
(51) Int. Cl.: C03B 23/023, C03B 23/025, C03B 23/03, C03B 23/035, C03B 25/02, C03B 29/08

(54) **GLASBIEGEVERFAHREN MIT LASERUNTERSTÜTZUNG**
GLASS BENDING METHOD WITH LASER SUPPORT
PROCÉDÉ DE BOMBAGE DE VERRE À L'AIDE D'UN LASER

(30) Priorität: 28.05.2019 EP 19176881
(43) Veröffentlichungstag der Anmeldung: 06.04.2022
(73) Patentinhaber: Saint-Gobain Sekurit France, 60150 Thourotte (FR)
(72) Erfinder: PALMANTIER, Arthur, 52064 Aachen (DE); ZEICHNER, Achim, 52134 Herzogenrath (DE); HAGEN, Jan, 53123 Bonn (DE); YEH, Li-Ya, 52511 Geilenkirchen (DE); GEHNEN, Lutz, 52070 Aachen (DE)
(74) Vertreter: Gebauer, Dieter Edmund
(86) Internationale Anmeldenummer: PCT/EP2020/059845
(87) Internationale Veröffentlichungsnummer: WO 2020/239304

(56) Entgegenhaltungen:
- DE-A1- 102006 035 555
- US-A1- 2016 031 737
- US-A1- 2018 297 886

## Beschreibung

Die Erfindung betrifft ein Verfahren zum Biegen von Glasscheiben unter Verwendung eines Lasers.

Verglasungen für Kraftfahrzeuge weisen typischerweise eine Biegung auf. Um eine solche Biegung zu erzeugen, wird die im Ausgangszustand plane Glasscheibe auf mindestens ihre Erweichungstemperatur erwärmt, typischerweise durch Heizstrahler. Anschließend wird die Glasscheibe in einem ein- oder mehrstufigen Prozess verformt. Es sind verschiedene Biegeverfahren gebräuchlich, wie Schwerkraftbiegen (auch *gravity bending* oder *sag bending*), Pressbiegen oder Saugbiegen.

Um eine hohe optische Qualität der Glasscheibe zu gewährleisten, die eine weitgehend verzerrungsfreie Durchsicht erlaubt, kommen häufig sogenannte Biegerahmen (auch als rahmenartige Biegeformen bezeichnet) zum Einsatz. Eine solche Biegeform kontaktiert beim Biegen nicht die gesamte Scheibenoberfläche, sondern nur einen peripheren Randbereich. Dem Grad der erreichbaren Biegung sind dabei allerdings Grenzen gesetzt. Insbesondere Scheibenformen mit lokalen Bereichen mit starker Krümmung (kleinen Krümmungsradien) und/oder starker Krümmungsänderung (hohen Krümmungsgradienten), die relativ weit vom Scheibenrand entfernt liegen, sind nur schwer oder gar nicht realisierbar.

Um solche komplexen Scheibenformen zu realisieren ist es hilfreich, die betroffenen Bereiche lokal weiter zu erhitzen, um dort eine höhere Formbarkeit der Scheibe zu gewährleisten. Bei diskontinuierlichen Biegeverfahren ist dies relativ einfach zu erreichen. Bei solchen Biegeverfahren, die beispielsweise aus EP 1 358 131 A1 und EP 2 463 247 A1 bekannt sind, ist die Glasscheibe typischerweise auf einer Transportform gelagert und verweilt während des Biegeprozesses ein- oder mehrfach relativ lange an einer Stelle, darunter im Heizofen. Dort kann dann durch gezielte Gestaltung der Heizstrahler ein gewünschtes Temperaturprofil auf der Glasscheibe erzeugt werden. Die aufwendigen diskontinuierlichen Biegeverfahren sind insbesondere für hochwertige Verbundscheiben wie Windschutzscheiben gebräuchlich.

Daneben existieren aber auch kontinuierliche Biegeverfahren, die mit einer deutlich höheren Taktung durchgeführt werden, insbesondere für Einscheibensicherheitsglas wie Seitenscheiben oder Heckscheiben. Dabei wird die Glasscheibe kontinuierlich durch die Biegevorrichtung bewegt, insbesondere auf einem Rollenfördersystem, ohne an einer Stelle zu verweilen. Diese Verfahren geben dem Glashersteller deutlich weniger Möglichkeiten, auf die Erwärmung der Glasscheibe Einfluss zu nehmen und ein spezifisches Temperaturprofil zu erzeugen. Beispielsweise offenbart WO 2017/178733 A1 ein solches Biegeverfahren.

Aus DE102007012146A1 ist ein Biegeverfahren für Glasartikel bekannt, bei dem die zu biegenden Bereiche des Glases mittels eines Lasers erwärmt werden und sich dann unter der Wirkung der Schwerkraft verformen. Eine Biegeform wird nicht verwendet, stattdessen erfolgt die gewünschte Formgebung durch gezielte selektive Erwärmung des Glasartikels. Ein solches Verfahren erfordert hohe Taktzeiten und ist daher für eine industrielle Massenfertigung nicht geeignet.

US2018297886A1 offenbart eine Vorrichtung, bei der eine Glasscheibe zwischen einem Heizofen und einem Biegeofen mittels Laserstrahlung vollflächig erwärmt wird, um ein Auskühlen der Glasscheibe vor dem Biegen zu verhindern.

DE102006035555A1 und WO2019179842A1 offenbaren Verfahren, bei denen eine Glasscheibe mittels Heizmittel auf einer Temperatur unterhalb der Erweichungstemperatur vorgewärmt wird und anschließend ein Teilbereich der Glasscheibe mittels Laserstrahlung über die Erweichungstemperatur erwärmt wird, um diesen Teilbereich lokal biegen zu können.

US2016031737A1 und DE102007012146A1 offenbaren Verfahren, bei denen eine Glasscheibe ausschließlich mittels Laserstrahlung auf Erweichungstemperatur erwärmt wird, um im Anschluss ohne Einwirkung eines äußeren Drucks durch ein Kontaktmittel, sondern rein aufgrund der Wirkung der Schwerkraft geformt wird.

Es besteht daher Bedarf an verbesserten Biegeverfahren mit denen die Glasscheibe vor dem Biegen entsprechend eines gezielten Temperaturprofils erwärmt werden kann, um komplexe Scheibengeometrien zu realisieren. Der vorliegenden Erfindung liegt die Aufgabe zugrunde, ein solches Biegeverfahren bereitzustellen. Das Biegeverfahren soll für eine industrielle Massenfertigung geeignet sein, insbesondere auch kontinuierlich betrieben werden können.

Die Aufgabe der Erfindung wird erfindungsgemäß gelöst durch ein Verfahren zum Biegen einer Glasscheibe gemäß dem unabhängigen Patentanspruch. Bevorzugte Ausgestaltungen und Ausführungen gehen aus den abhängigen Ansprüchen hervor.

Die Vorrichtung zum Biegen einer Glasscheibe umfasst zumindest ein, insbesondere mehrere Heizmittel zur Erwärmung der zu biegenden Glasscheibe und ein Kontaktmittel zum Formen (insbesondere Biegen) der Glasscheibe. Die Heizmittel sind geeignet, die Glasscheibe im Wesentlichen gleichmäßig zu erwärmen, wie es auch bei herkömmlichen Biegevorrichtungen üblich ist. Unter einer gleichmäßigen Erwärmung wird eine solche Erwärmung verstanden, bei der die gesamten Hauptoberflächen der Glasscheibe im Wesentlichen derselben Temperatur ausgesetzt werden, ohne dass ein ausgeprägtes Temperaturprofil erzeugt werden würde. Das Kontaktmittel ist geeignet ist, die Form der erwärmten Glasscheibe durch direkten Kontakt zu beeinflussen, um sie in die gewünschte Geometrie zu biegen. Die erfindungsgemäße Vorrichtung umfasst außerdem mindestens einen Laser. Der Laser ist dazu geeignet und vorgesehen, die Temperatur mindestens eines Bereichs der Glasscheibe weiter zu erhöhen, nachdem die Glasscheibe mit den Heizmitteln erwärmt wurde und bevor die Glasscheibe gebogen wird, also bevor die Form der Glasscheibe mit dem Kontaktmittel beeinflusst wird.

Beim erfindungsgemäßen Verfahren zum Biegen einer Glasscheibe wird die Glasscheibe zunächst im Wesentlichen gleichmäßig durch Heizmittel erwärmt. Dabei wird die Glasscheibe mindestens auf ihre Erweichungstemperatur gebracht, bei der das Glas in einen formbaren Zustand gerät. Anschließend wird die Temperatur mindestens eines Bereichs der Glasscheibe mittels eines Lasers weiter erhöht. Anschließend wird die Glasscheibe mittels eines Kontaktmittels zum Formen der Glasscheibe in die gewünschte Form gebogen, das heißt die Form der Glasscheibe wird mit dem Kontaktmittel beeinflusst.

Die Vorrichtung und das Verfahren werden im Folgenden gemeinsam vorgestellt, wobei sich Erläuterungen und bevorzugte Ausgestaltungen gleichermaßen auf Vorrichtung und Verfahren beziehen. Sind bevorzugte Merkmale im Zusammenhang mit dem Verfahren beschrieben, so ergibt sich daraus, dass auch die Vorrichtung bevorzugt entsprechend ausgelegt und geeignet ist. Sind umgekehrt bevorzugte Merkmale im Zusammenhang mit der Vorrichtung beschrieben, so ergibt sich daraus, dass auch das Verfahren bevorzugt entsprechend durchgeführt wird.

Die Erfindung beruht darauf, Bereiche der Glasscheibe mit dem Laser gezielt über das mit dem Heizmittel erreichte Maß zu erhitzen, um ihnen eine gesteigerte Verformbarkeit zu verleihen. Im Prinzip kann die gesamte Scheibe mit dem Laser oder der Mehrzahl an Lasern erwärmt werden, was für bestimmte Anwendungen auch vorteilhaft sein kann. Erfindungsgemäß wird aber nur ein Teilbereich oder mehrere Teilbereiche der Glasscheibe mit dem Laser lokal erwärmt, um ihre Temperatur über diejenige der übrigen Glasscheibe zu erhöhen. Die besagten Bereiche sind insbesondere solche Bereiche, in denen die Glasscheibe eine ausgeprägte Krümmung, das heißt besonders kleine Krümmungsradien, aufweisen soll und/oder in denen starke Änderungen der Krümmung, das heißt ein hoher Krümmungsgradient, auftreten sollen. Durch die zusätzliche lokale Erwärmung werden diese Bereiche mit einer gesteigerten Verformbarkeit versehen, so dass die gewünschten Krümmungen leichter erzeugt werden können. Das ist ein großer Vorteil der vorliegenden Erfindung. Die Erfindung erlaubt für bestimmte Anwendungen auch eine Herabsetzung der (durch die Heizmittel bereitgestellten) Biegetemperatur, die gerade hoch genug gewählt wird, um die maximale Krümmung des Großteils der Scheibe zu erreichen, während stärker gekrümmte Bereiche durch die lokale zusätzliche Erwärmung durch den Laser realisiert werden. Da eine geringere Biegetemperatur zu einer besseren optischen Qualität der Scheibe führt, kann die Qualität des Großteils des Durchsichtsbereichs durch die Erfindung gesteigert werden. Schließt sich an den Biegeprozess ein thermischer Vorspannprozess an, so kann durch die zusätzliche Erwärmung durch den Laser lokal auch eine höhere Vorspannung erzielt werden, falls dies gewünscht ist. Beim thermischen Vorspannen wird die erwärmte Scheibe schnell mittels eines Luftstroms abgekühlt, wobei der Grad der Vorspannung wesentlich von der Ausgangstemperatur abhängt. Das sind weitere Vorteile der vorliegenden Erfindung.

Das Kontaktmittel wirkt durch direkten Kontakt auf die erwärmte Glasscheibe ein, wobei die Glasscheibe gebogen wird. Dabei die Glasscheibe insbesondere an die Form des Kontaktmittels angepasst. In einer Ausgestaltung der Erfindung ist das Kontaktmittel als mindestens eine Biegeform ausgebildet. Das Kontaktmittel kann aber auch als Rollengang ausgebildet sein, also als eine Anordnung einander gegenüberliegender Rollen, die einen gekrümmten Weg beschreiben und zwischen denen die Glasscheibe gefördert wird. Während des Durchgangs durch den Rollengang wird die Glasscheibe an die Form des gekrümmten Weges angepasst.

Es kommen insbesondere solche Kontaktmittel zum Einsatz, die eine Druckwirkung auf die Glasscheibe auswirken, um die Glasscheibe zu verformen. Das Kontaktmittel ist bevorzugt eine Pressbiegeform oder Saugbiegeform oder ein Rollengang.

Die zu biegende Glasscheibe ist im Ausgangszustand typischerweise plan. Sie wird mittels der Heizmittel und des Lasers erwärmt und anschließend mittels des Kontaktmittels gebogen. Dass die Bestrahlung durch den Laser erfindungsgemäß nach der Erwärmung mit den Heizmitteln ausgeführt wird, bedeutet nicht, dass die Heizmittel ihre Funktion einstellen müssen, wenn die Laserbestrahlung einsetzt. Die Scheibe wird zunächst mit den Heizmitteln erwärmt und mit der Laserstrahlung (lokal) auf eine noch höhere Temperatur gebracht. Dies kann auf verschiedene Weise bewerkstelligt werden. So können die Heizmittel und der Laser über den gesamten Zeitraum gleichzeitig auf die Glasscheibe einwirken, die Laserstrahlung kann im Vergleich zu den Heizmitteln verzögert einsetzen, wobei die Heizmittel aber weiterwirken, oder die Einwirkung der Heizmittel kann beim Einsetzen der Laserstrahlung bereits abgeschlossen sein.

Die Glasscheibe weist zwei einander gegenüberliegende Hauptoberflächen auf, die zur Durchsicht vorgesehen sind, und eine umlaufende Seitenkante, die sich zwischen den Hauptoberflächen erstreckt. Die Heizmittel wirken im Wesentlicher gleichmäßig und vollflächig mindestens auf die beiden Hauptoberflächen der Glasscheibe ein, insbesondere durch Wärmestrahlung oder Konvektion. Die Heizmittel sind insbesondere solche, wie sie auch bei herkömmlichen Biegevorrichtungen zum Einsatz kommen. Die Heizmittel können beispielsweise nach Art eines Konvektionsofens ausgestaltet sein, wobei einer Heizkammer erwärmte Luft zugeleitet wird, wodurch die Erwärmung der Glasscheibe in der Heizkammer erreicht wird. Typischerweise sind die Heizmittel aber als Heizstrahler ausgebildet. Dabei ist bevorzugt mindestens ein Heizstrahler, insbesondere mehrere Heizstrahler der einen Hauptoberfläche der Glasscheibe zugeordnet und zugewandt und ebenso mindestens ein Heizstrahler, insbesondere mehrere Heizstrahler der anderen Hauptoberfläche. Die Hauptoberflächen werden durch die ihnen zugeordneten und zugewandten Heizstrahler mit Wärmestrahlung beaufschlagt, wodurch die Erwärmung der Glasscheibe erreicht wird. Vorteilhafterweise wird die Glasscheibe horizontal liegend auf einer Transportvorrichtung in eine Heizkammer transportiert, wo unterhalb und oberhalb der Transportvorrichtung die Heizstrahler angeordnet sind, um auf die beiden Hauptoberflächen einzuwirken.

Die Glasscheibe wird durch das oder die Heizmittel mindestens auf ihre Erweichungstemperatur erwärmt. Bevorzugt wird die Glasscheibe mittels des oder der Heizmittel über ihre Erweichungstemperatur erwärmt. Unter der Erweichungstemperatur wird die Glasübergangstemperatur verstanden, bei der das Glas vom spröden, energieelastischen Bereich in den weichen, entropieelastischen Bereich übergeht. Mit Erreichen der Erweichungstemperatur wird die Glasscheibe plastisch formbar. Die Glasscheibe wird also insgesamt erwärmt, so dass sie plastisch formbar wird. Man kann auch von einer volumenmäßigen Erwärmung der Glasscheibe sprechen.

In einer Ausgestaltung kommt mindestens eine Biegeform zum Biegen der Glasscheibe als Kontaktmittel zum Einsatz. Hierbei können alle Arten von Biegeformen zum Einsatz kommen, wie sie auch bei herkömmlichen Biegevorrichtungen gebräuchlich sind. Eine Biegeform weist eine Wirkfläche auf, die mit der Glasscheibe in Kontakt kommt und zur Formung auf diese einwirkt, um sie an die Form der Wirkfläche anzupassen und dadurch zu verbiegen. Die Wirkfläche ist dazu geeignet, die Form der Glasscheibe zu beeinflussen. Die Wirkfläche kann auch als Auflagefläche oder Kontaktfläche bezeichnet werden. Die Wirkfläche legt die Form der gebogenen Glasscheibe fest. Die Wirkfläche kann in unmittelbarem Kontakt zur Glasscheibe stehen. Die Wirkfläche kann aber auch beispielsweise mit einem Gewebe versehen sein, welches zwischen der eigentlichen Wirkfläche und der Glasscheibe angeordnet ist.

Die Wirkfläche kann vollflächig oder rahmenartig ausgebildet sein. Eine vollflächige Biegeform beziehungsweise Wirkfläche kann auch massiv bezeichnet werden und steht am Ende des Biegeschrittes mit einem Großteil der Scheibenfläche in Kontakt. Die vollflächige Wirkfläche kann mit Löchern oder Öffnungen ausgestattet sein, durch die eine Saugwirkung auf die der Wirkfläche zugewandten Oberfläche der Glasscheibe ausgeübt werden kann. Die Vorrichtung umfasst in diesem Fall außerdem Mittel zum Erzeugen einer Saugwirkung, die mit der Wirkfläche verbunden sind, beispielsweise Venturi-Düsen, Ventilatoren oder Pumpen. Eine rahmenartige Biegeform beziehungsweise Wirkfläche kann auch als Ring (Biegering) oder Rahmen (Rahmenform) bezeichnet werden. Die Wirkfläche ist in Form eines vollständigen oder unterbrochenen Rahmens ausgebildet. Nur ein kleiner Teil der Oberfläche der Glasscheibe steht beim Biegen mit der rahmenartigen Wirkfläche in Kontakt, während der größte Teil der Scheibe keinen direkten Kontakt zum Werkzeug hat. Dadurch lassen sich Scheiben mit besonders hoher optische Qualität erzeugen. Der mit der Wirkfläche kontaktierte Bereich der Glasscheibe ist typischerweise ihr umlaufender peripherer Randbereich, die Glasscheibe kann aber auch über die Wirkfläche überstehen.

In einer besonders vorteilhaften Ausgestaltung kommt zumindest eine rahmenartige Biegeform (Biegeform mit einer rahmenartigen Wirkfläche) zum Einsatz. Komplexe Biegungen abseits des peripheren Randbereichs sind mit solchen Formen schwierig zu erzeugen, weil ohne den direkten Kontakt zur Wirkfläche die Möglichkeiten der Formgebung eingeschränkt sind. Daher treten die Vorteile der Erfindung mit der zusätzlichen Erwärmung durch den Laser in Verbindung mit rahmenartigen Biegeformen in besonderem Maße in Erscheinung. Die rahmenartige Biegeform ist insbesondere eine rahmenartige Pressbiegeform.

Die Wirkfläche einer Biegeform kann konvex oder konkav ausgebildet sein oder auch als eine Kombination von beidem. Unter einer konkaven Form wird eine Form verstanden, bei der die Ecken und Ränder der Glasscheibe im bestimmungsgemäßen Kontakt mit der Wirkfläche in Richtung von der Biegeform weg gebogen sind. Unter einer konvexen Form wird umgekehrt eine Form verstanden, bei der die Ecken und Ränder der Glasscheibe im bestimmungsgemäßen Kontakt mit der Wirkfläche in Richtung zur Biegeform hingebogen sind. Eine im Wesentlichen konkave Wirkfläche kann zusätzlich konvexe Bereiche aufweisen und eine im Wesentlichen konvexe Wirkfläche zusätzlich konkave Bereiche.

Die Glasscheibe wird typischerweise horizontal liegend durch die Biegevorrichtung transportiert. Die mindestens eine Biegeform kann dann eine obere oder eine untere Biegeform sein. Unter einer unteren Biegeform wird im Sinne der Erfindung eine Form verstanden, welche die untere, dem Erdboden zugewandten Oberfläche der Glasscheibe berührt beziehungsweise ihr zugeordnet ist und auf sie wirkt. Typischerweise steht zu Beginn des Biegeschritts nur ein Teil der Wirkfläche mit der Glasscheibe in Kontakt und die Glasscheibe legt sich im Laufe des Biegeschritts an die Wirkfläche an. Dies kann unter Einwirkung der Schwerkraft, eines Pressdrucks oder einer Saugwirkung erfolgen.

Unter einer oberen Biegeform wird eine Form verstanden, die der oberen, vom Erdboden abgewandte Oberfläche der Glasscheibe zugeordnet ist und auf sie wirkt. Die Glasscheibe wird von der Transportvorrichtung an die Wirkfläche der oberen Biegeform angeblasen und/oder angesaugt, oder mit einem Werkzeug, beispielsweise einer unteren Biegeform, an die obere Biegeform gepresst. Die obere Biegeform kann ortsfest installiert sein oder sich zur Übernahme oder zum Pressen der Glasscheibe absenken.

Grundsätzlich können alle gebräuchlichen Biegeformen verwendet werden. Die Biegeform (oder eine der Biegeformen, sollten mehrere zum Einsatz kommen) kann beispielsweise eine Schwerkraftbiegeform sein. Unter einer Schwerkraftbiegeform wird eine untere Biegeform verstanden, auf welche die Glasscheibe abgelegt wird, woraufhin sie sich unter der Einwirkung der Schwerkraft an die Wirkfläche anlegt. Die Wirkfläche ist dabei typischerweise und bevorzugt rahmenartig ausgebildet, kann aber auch vollflächig ausgebildet sein.

In einer bevorzugten Ausgestaltung ist die Biegeform (oder eine der Biegeformen, sollten mehrere zum Einsatz kommen) eine obere Biegeform, an deren Wirkfläche die Glasscheibe von der Transportvorrichtung angeblasen und/oder angesaugt wird. Mit solchen Biegeformen sind besonders kurze Taktzeiten zu erreichen. Die Wirkfläche ist bevorzugt vollflächig ausgebildet, kann aber auch rahmenartig ausgebildet sein.

In einer besonders bevorzugten Ausgestaltung umfasst die Vorrichtung eine obere Biegeform und eine untere Biegeform, zwischen denen die Glasscheibe zum Biegen gepresst wird (Pressbiegen). Die obere Biegeform weist bevorzugt eine vollflächige Wirkfläche auf, kann aber auch eine rahmenartige Wirkfläche aufweisen. Die untere Biegeform weist bevorzugt eine rahmenartige Wirkfläche auf, wodurch Glasscheiben mit hoher optische Qualität gebogen werden können. In einer vorteilhaften Ausgestaltung wird die Glasscheibe von der Transportvorrichtung an die Wirkfläche der oberen Biegeform angeblasen und/oder angesaugt. Die Vorrichtung erfasst dann außerdem Mittel, um die untere und die obere Biegeform gegeneinander zu bewegen, beispielsweise Zylinder, Stellmotoren, ein Kettenzugsystem oder einen Roboterarm, mit denen die obere Biegeform abgesenkt und/oder die untere Biegeform angehoben werden kann.

Die Vorrichtung ist bevorzugt mit Transportmitteln zum Transport der Glasscheibe ausgestattet. Die Transportmittel dienen dazu, die zu biegenden Glasscheibe zu den Heizmitteln, zum Laser und zur Biegeform zu transportieren. In einer bevorzugten Ausgestaltung sind die Transportmittel als Rollenfördersystem oder Bandfördersystem ausgebildet, auf dem die Glasscheibe direkt aufliegt und horizontal liegend bewegt wird. Damit sind besonders kurze Taktzeiten realisierbar. Alternativ kann die Glasscheibe aber auch auf einer Transportform gelagert sein, insbesondere einer Form mit rahmenartiger Auflagefläche, welche ihrerseits beispielsweise mittels eines Rollen-, Band- oder Schienenfördersystems bewegt wird.

Die Transportmittel sind in einer bevorzugten Ausgestaltung als kontinuierliches Fördersystem ausgebildet, besonders bevorzugt kontinuierliches Rollenfördersystem. Bei einem solchen Fördersystem wird die Glasscheibe kontinuierlich durch die Vorrichtung zur Biegeform hinbewegt, ohne längere Zeit an einem Ort zu verweilen. Die Glasscheibe wird mittels des kontinuierlichen Fördersystems in einer kontinuierlichen Bewegung den Heizmitteln und der Biegeform zugeführt. Die Glasscheibe wird während der kontinuierlichen Bewegung mittels der Heizmittel erwärmt. Die Heizmittel, insbesondere Heizstrahler, sind bevorzugt oberhalb und unterhalb der Rollen des Rollenfördersystems angeordnet und auf das Rollenfördersystem gerichtet, so dass sie auf beide Hauptoberflächen der Glasscheibe simultan einwirken, wodurch eine effiziente Erwärmung der Glasscheibe erreicht wird. Bei einem solchen kontinuierlichen Verfahren treten die Vorteile der Erfindung in besonderem Maße hervor, weil die kontinuierliche Bewegung wenig Möglichkeiten bietet, durch Gestaltung und/oder Betrieb der Heizmittel ein gewünschtes Temperaturprofil auf der Glasscheibe zu erzeugen, was dann aber durch die erfindungsgemäße Erwärmung mittels des Lasers erreicht werden kann. Kontinuierliche Rollenfördersysteme sind insbesondere beim Biegen von relativ kostengünstigem Einscheibensicherglas gebräuchlich, beispielsweise für Seiten-, Dach- oder Heckscheiben von Fahrzeugen. Die Fördergeschwindigkeit des kontinuierlichen Fördersystems beträgt bevorzugt von 100 mm/s bis 600 mm/s. Die Erfindung kann grundsätzlich aber auch für nicht-kontinuierliche Biegevorrichtungen verwendet werden, bei denen die Bewegung der Glasscheibe unterbrochen wird und die Glasscheibe insbesondere zur Erwärmung mit den Heizmitteln längere Zeit an einer Stelle verweilt oder hin und her bewegt wird. Anstatt eines kontinuierlichen Rollenfördersystems kann ebenso ein kontinuierliches Bandfördersystem eingesetzt werden. Das Fördersystem kann auch vollständig oder abschnittsweise als Luftkissenfördersystem ausgebildet sein.

Zwischen der Erwärmung der Glasscheibe mit dem Laser und der Biegung der Glasscheibe mit dem Kontaktmittel sollte wenig Zeit vergehen, um der Glasscheibe möglichst wenig Zeit für einen Temperaturausgleich zu geben, wodurch sich die durch den Laser erwärmten Bereiche wieder abkühlen würden. Die Zeitspanne zwischen dem Abschluss der Laserbestrahlung und dem Einsetzen der Biegung durch die mindestens eine Biegeform beträgt bevorzugt höchstens 10 s (beispielsweise von 1 s bis 10 s), besonders bevorzugt höchstens 5 s (beispielsweise von 1 s bis 5 s).

Die Glasscheibe wird durch die Heizmittel bevorzugt auf eine Temperatur von 500 °C bis 700 °C erwärmt, besonders bevorzugt von 550 °C bis 670 °C, beispielsweise etwa 650 °C. Das entspricht typischen Biegetemperaturen für Glasscheiben, insbesondere für solche aus Kalk-Natron-Glas. Durch den Laser wird die Temperatur der bestrahlten Bereiche bevorzugt um mindestens 5 °C erhöht, besonders bevorzugt um mindestens 10 °C, ganz besonders bevorzugt um mindestens 15 °C und insbesondere um mindestens 20 °C. Kleinere Temperaurerhöhungen können schon Vorteile hinsichtlich der Vorspannung bringen, wenn die Scheibe nach dem Biegen thermisch vorgespannt wird. Größere Temperaturerhöhungen sind insbesondere vorteilhaft hinsichtlich einer besseren Verformbarkeit, wodurch komplexere gebogene Formen realisiert werden können.

In einer Ausgestaltung der Erfindung sind die Heizmittel in einer Heizkammer angeordnet und das Kontaktmittel zum Formen der Glasscheibe (insbesondere eine Biegeform oder mehrere Biegeformen) in einer Biegekammer. Heizkammer und Biegekammer sind voneinander getrennt und durch jeweils eine Kammerwand gegenüber der Umgebung (weitestgehend) abgeschlossen. Die Transportmittel durchlaufen die Heizkammer und führen in die Biegekammer hinein oder durchlaufen diese. Die Glasscheibe wird mit den Transportmitteln in die Heizkammer hinein und wieder aus der Heizkammer heraus transportiert. Bevorzugt befinden sich Ein- und Ausgang der Heizkammer an einander gegenüberliegenden Seiten, so dass die Glasscheibe mit den Transportmitteln durch die Heizkammer hindurch transportiert wird. Anschließend wird die Glasscheibe in die Biegekammer transportiert und an das Kontaktmittel übergeben. Die Glasscheibe kann nach dem Biegen wieder auf die Transportmittel abgelegt werden, um sie aus der Biegekammer heraus zu transportieren, oder anderweitig aus der Biegekammer transportiert werden. Heiz- und Biegekammer weisen Öffnungen auf für den Transport der Glasscheibe. Zumindest bei der Heizkammer sind die Öffnungen bevorzugt schlitzartig ausgeführt mit möglichst geringer Höhe, um ein starkes Auskühlen der Kammer zu verhindern. Die Öffnungen können optional mit einem Schiebetür- oder Vorhangsystem verschlossen werden, wenn gerade keine Glasscheibe durch die Öffnung transportiert wird.

Der mindestens eine Laser ist in dieser Ausgestaltung bevorzugt außerhalb der Heizkammer und außerhalb der Biegekammer angeordnet. Der Laser kann in die Heizkammer, in die Biegekammer oder zwischen die Heizkammer und die Biegekammer gerichtet sein und die Glasscheibe dort bestrahlen, wenn sie mit dem Fördersystem an die entsprechende Stelle gebracht wurde. Ist der Laser in eine Kammer gerichtet, so muss die Kammerwand natürlich eine Öffnung für die Laserstrahlung aufweisen, also einen für die Laserstrahlung weitestgehend transparenten Bereich. Die Öffnung kann optional beispielsweise mit einer Glasscheibe verschlossen werden, die eine möglichst geringe Absorption gegenüber der Laserstrahlung aufweist. Die Öffnung kann alternativ aber auch einfach durch eine Unterbrechung in der Kammerwand ausgebildet sein, die optional wiederum beispielsweise durch eine Schiebetür verschlossen werden kann, wenn gerade keine Laserbestrahlung stattfindet.

In einer weiteren Ausgestaltung der Erfindung sind die Heizmittel und das Kontaktmittel (insbesondere eine Biegeform oder mehrere Biegeformen) in einer gemeinsamen Kammer angeordnet, die als kombinierte Heiz- und Biegekammer bezeichnet wird. Die kombinierte Heiz- und Biegekammer ist durch eine Kammerwand gegenüber der Umgebung (weitestgehend) abgeschlossen. Die Transportmittel führen in die Heiz- und Biegekammer hinein oder durchlaufen diese. Die Glasscheibe wird mit den Transportmitteln in die Heiz- und Biegekammer hinein transportiert. Die Glasscheibe wird dort zunächst der Wirkung der Heizmittel ausgesetzt und anschließend an das Kontaktmittel übergeben. Die Glasscheibe kann nach dem Biegen wieder auf die Transportmittel abgelegt werden, um sie aus der Heiz- und Biegekammer heraus zu transportieren, oder anderweitig aus der Heiz- und Biegekammer transportiert werden. Die Heiz- und Biegekammer weist Öffnungen auf für den Transport der Glasscheibe. Die Öffnungen können optional mit einem Schiebetür- oder Vorhangsystem verschlossen werden, wenn gerade keine Glasscheibe durch die Öffnung transportiert wird.

Der mindestens eine Laser ist in dieser Ausgestaltung bevorzugt außerhalb der kombinierten Heiz- und Biegekammer angeordnet und in diese hinein gerichtet und bestrahlt dort die Glasscheibe, wenn sie mit dem Fördersystem an eine geeignete Stelle gebracht wurde, bevorzugt an eine Stelle zwischen den Heizmitteln und der mindestens einen Biegeform. Auch hier muss die Kammerwand natürlich eine Öffnung für die Laserstrahlung aufweisen, die optional beispielsweise mit einer Glasscheibe verschlossen werden kann, die eine möglichst geringe Absorption gegenüber der Laserstrahlung aufweist. Die Öffnung kann alternativ aber auch einfach durch eine Unterbrechung in der Kammerwand ausgebildet sein, die optional wiederum beispielsweise durch eine Schiebetür verschlossen werden kann, wenn gerade keine Laserbestrahlung stattfindet.

Ist der Laser in die Biegekammer oder die kombinierte Heiz- und Biegekammer gerichtet, so kann er in einer vorteilhaften Ausgestaltung derart auf das Kontaktmittel gerichtet sein, dass er die Glasscheibe erwärmt, wenn sie bereits an das Kontaktmittel angelegt ist. So kann der Zeitraum zwischen Lasererwärmung und Biegung minimiert werden.

Grundsätzlich kann für die Erfindung jeder beliebige Laser verwendet werden, der dazu geeignet ist, die Glasscheibe zu erwärmen. Dazu sind insbesondere Laser mit einer Strahlungswellenlänge geeignet, für die die Glasscheibe einen hohen Absorptionskoeffizienten aufweist. Ist die Glasscheibe nicht in hohem Maße getönt oder gefärbt, wie es für Fensterverglasungen üblich ist, so eignen sich insbesondere Wellenlängen im mittleren Infrarotbereich. Die Laserstrahlung weist bevorzugt eine Wellenlänge von 500 nm bis 20 µm auf, besonders bevorzugt von 1000 nm bis 15 µm, insbesondere von 5 µm bis 15 µm. Besonders geeignet ist ein CO₂-Laser, typischerweise mit einer Wellenlänge von 9,4 µm oder 10,6 µm. Es kann aber auch beispielsweise ein Diodenlaser oder Festkörperlaser (beispielsweise ein Nd:YAG-Laser) verwendet werden.

Der Laser wird bevorzugt im Dauerstrichbetrieb (CW, *continuous wave*) betrieben. Es hat sich gezeigt, dass damit eine gute Erwärmung der Glasscheibe erreicht wird. Zudem ist ein Dauerstrichbetrieb technisch einfacher zu bewerkstelligen als ein gepulster Betrieb. Alternativ ist aber auch ein gepulster Betrieb des Lasers möglich.

Der Laser wird bevorzugt mit einer Ausgangsleistung von mindestens 1 kW betrieben, um eine wirksame Erwärmung der Glasscheibe zu gewährleisten. Die Ausgangsleistung beträgt bevorzugt von 1 kW bis 10 kW.

Die Ausdehnung der Laserstrahlung ("Fläche des Laserspots") auf der Glasscheibe beträgt vorteilhafterweise mindestens 1 mm², bevorzugt von 1 mm² bis 10.000 mm², besonders bevorzugt von 100 mm² bis 2500 mm², ganz bevorzugt von 400 mm² bis 1000 mm². In diesem Bereich ist die Laserstrahlung einerseits ausreichend konzentriert, um die Glasscheibe wirksam zu erwärmen, und andererseits ausreichend ausgedehnt, um eine angemessene Fläche simultan erwärmen zu können. Der gewünschte Laserspot kann mittels geeigneter Optiken im Strahlengang des Lasers eingestellt werden, insbesondere mittels Linsen oder Objektiven, beispielsweise f-theta-Linsen oder f-theta-Objektive oder Polygon-Scanner. Es können auch weitere Elemente im Strahlengang angeordnet sein, beispielsweise Lichtwellenleiter (wie Glasfasern), Kollimatoren, Blenden oder optische Filter.

Der Laser ist in einer bevorzugten Ausgestaltung mit einem Laserscansystem ausgestattet, um die Strahlung über die Glasscheibe bewegen zu können. Ist der zu erwärmende Bereich der Glasscheibe größer als der Laserspot, kann die Laserstrahlung damit über den gesamten Bereich bewegt werden, um ihn zu erwärmen. Außerdem können verschiedene Typen von Glasscheiben ohne aufwendige Umbauarbeiten am Lasersystem mit derselben Vorrichtung gebogen werden - die Laserstrahlung wird einfach mit dem Laserscansystem an der erforderlichen Stelle positioniert. Das Laserscansystem kann zur eindimensionalen (entlang einer Raumrichtung) oder zweidimensionalen Bewegung (entlang zweier zueinander orthogonaler Raumrichtungen) der Laserstrahlung ausgelegt sein. Ein eindimensionales Laserscansystem umfasst typischerweise einen Spiegel, der in einer Richtung verkippt werden kann, um die Strahlung zu bewegen. Ein zweidimensionales Laserscansystem umfasst einen Spiegel, der in zwei (bevorzugt zueinander orthogonalen) Richtungen verkippt werden kann, oder (bevorzugt) zwei Spiegel, die in jeweils einer Richtung verkippt werden können, wobei diese beiden Richtungen unterschiedlich (bevorzugt zueinander orthogonal) sind. Die Geschwindigkeit, mit der die Laserstrahlung über die Glasscheibe bewegt wird, beträgt bevorzugt mindestens 10 m/s, um die Glasscheibe wirksam zu erwärmen.

Die Vorrichtung kann mit Mitteln ausgestattet sein, die es erlauben, den Arbeitsabstand zwischen Laserscansystem und Glasscheibe einzustellen. Dies kann beispielsweise durch Befestigung des Laserscansystems an einer beweglichen Achse erreicht werden oder durch Verwendung eines dreidimensionalen Scanners.

Ist die Vorrichtung für ein kontinuierliches Biegeverfahren ausgelegt, wobei die Glasscheiben kontinuierlich unter der Laserstrahlung bewegt werden, so ist ein eindimensionales Laserscansystem ausreichend, dessen Scanrichtung bevorzugt quer, insbesondere orthogonal zur Bewegungsrichtung der Glasscheibe ausgerichtet ist. Die Laserstrahlung kann dann orthogonal zur Bewegungsrichtung der Glasscheibe (Förderrichtung der Transportmittel) bewegt werden, um die gesamte Breite des zu erwärmenden Bereichs abzudecken und zu bestrahlen. Durch den Vorschub des Transportsystems der Glasscheibe wird der gesamte zu erwärmende Bereich der Laserstrahlung ausgesetzt.

Die Vorrichtung kann mehr als einen Laser umfassen. Weist die Glasscheibe mehrere voneinander getrennte Bereiche auf, die durch Laserstrahlung erwärmt werden sollen, so ist bevorzugt jedem Bereich ein eigener Laser zugeordnet. Die gewünschte Erwärmung kann so schneller erreicht werden, als wenn ein einzelner Laser über die mehreren Bereiche bewegt werden müsste.

Es ist ausreichend, wenn die Glasscheibe von einer Seite aus mit Laserstrahlung bestrahlt wird. Grundsätzlich können aber auch zwei einander gegenüberliegende Laser verwendet werden, wobei beide Hauptoberflächen der Glasscheibe simultan bestrahlt werden.

In einer vorteilhaften Ausgestaltung wird jeweils nur eine einzelne Glasscheibe mit dem Laser erwärmt und gebogen. Grundsätzlich ist die Vorrichtung aber auch für Verfahren einsetzbar, bei denen zwei (oder mehr) aufeinanderliegende Glasscheiben simultan gebogen werden, wie es mitunter bei der Herstellung von Verbundscheiben üblich ist. Mehrere aufeinander liegende Glasscheiben lassen sich aber durch den Laser weniger wirksam erwärmen als eine einzelne Glasscheibe. Es ist aber ohne weiteres möglich, mehrere Glasscheiben direkt oder versetzt nebeneinander auf einem kontinuierlichen Fördersystem zu bewegen, wobei die mehreren Glasscheiben gleichzeitig mit den Heizmitteln erwärmt werden und anschließend mittels Laserstrahlung weiter erwärmt werden, entweder gleichzeitig durch jeweils einen eigenen Laser oder nacheinander durch denselben Laser,

In einer bevorzugten Ausführung wird die Glasscheibe nach dem Biegen thermisch vorgespannt, wie es bei der Herstellung von Einscheibensicherheitsglas üblich ist. Die Glasscheibe wird dazu auf einer Trägerform mit rahmenartiger Auflagefläche (Vorspannrahmen) abgelegt. Das Ablegen erfolgt bevorzugt direkt von einer Biegeform ausgehend, insbesondere einer oberen Biegeform. Die Vorrichtung ist daher bevorzugt mit Mitteln ausgestattet, einen Vorspannrahmen unter die obere Biegeform zu bewegen. Auf dem Vorspannrahmen wird die Glasscheibe der Biegekammer entnommen und einer Vorspannvorrichtung zugeführt. Alternativ kann die Glasscheibe auch nach Verlassen der Biegevorrichtung auf den Vorspannrahmen überführt werden. Der dafür erforderliche zusätzliche Zeitaufwand würde aber zu einem zwischenzeitlichen Abkühlen der Glasscheibe führen, was die Vorspannwirkung herabsetzt. Zum thermischen Vorspannen werden die Oberflächen der noch erwärmten Glasscheibe mit einem Gasstrom beaufschlagt und dadurch stark abgekühlt (abgeschreckt). Dadurch bildet sich ein charakteristisches Spannungsprofil in der Glasscheibe aus (Druckspannungen an den Oberflächen, Zugspannungen im Kern), wodurch die Bruchfestigkeit des Glases verbessert wird. Außerdem zerfällt die Glasscheibe im Falle eines Glasbruchs oder der Penetration der zentralen Zugspannungszone mit einem spitzen Gegenstand in Form sehr kleiner Fragmente, von denen nur eine geringe Verletzungsgefahr ausgeht.

In einer besonders bevorzugten Ausgestaltung sind die Transportmittel als kontinuierliches Rollenfördersystems ausgebildet. Die Heizmittel sind als Heizstrahler ausgebildet, die in einer Heizkammer oder einer kombinierten Heiz- und Biegekammer oberhalb und unterhalb der Rollen angeordnet sind. Die Glasscheibe wird durch das Rollenfördersystem kontinuierlich zwischen den Heizstrahlern hindurchbewegt und einer oberen Biegeform mit bevorzugt vollflächiger Wirkfläche zugeführt, die entweder in einer eigenen Biegekammer oder in der kombinierten Heiz- und Biegekammer oberhalb der Rollen angeordnet ist. Ist die Glasscheibe unterhalb der oberen Biegeform positioniert, wird sie an die obere Biegeform angeblasen (durch einen Luftstrom von unten) und/oder angesaugt. Dann wird eine untere Biegeform mit rahmenartiger Wirkfläche unter die obere Biegeform mit der Glasscheibe bewegt und die Glasscheibe wird zwischen der oberen Biegeform und der unteren Biegeform gepresst, um sie in die gewünschte Form zu biegen. Anschließend wird die untere Biegeform wieder entfernt, während die Glasscheibe nach wie vor durch Anblasen und/oder Ansaugen an der oberen Biegeform fixiert ist. Nun wird ein Vorspannrahmen unter die obere Biegeform mit der Glasscheibe bewegt und die Glasscheibe durch Ausschalten der Blas- oder Saugwirkung auf den Vorspannrahmen übergeben. Die Glasscheibe wird auf dem Vorspannrahmen aus der Biegekammer oder der kombinierten Heiz- und Biegekammer entnommen und einer Vorspannvorrichtung zugeführt, wo sie mit einem Luftstrom beaufschlagt und dadurch abgekühlt und thermisch vorgespannt wird.

Die zu biegenden Glasscheiben bestehen in einer bevorzugten Ausführung aus Kalk-Natron-Glas, wie es für Fensterscheiben üblich ist. Die zu biegenden Glasscheiben können aber auch andere Glassorten wie Borsilikatglas oder Quarzglas enthalten. Die Dicke der Glasscheibe beträgt typischerweise von 0,2 mm bis 10 mm, bevorzugt 0,5 mm bis 5 mm. In einer vorteilhaften Ausgestaltung weist die Glasscheibe eine Dicke von mindestens 2 mm auf, beispielsweise von 2 mm bis 5 mm. Die gebogene Glasscheibe ist in einer bevorzugten Ausführung als Fensterscheibe eines Fahrzeugs, insbesondere als Seitenscheibe oder Heckscheibe eines Kraftfahrzeugs vorgesehen.

Die Erfindung eignet sich insbesondere zum Biegen von Glasscheiben mit komplexen Krümmungen, die mit herkömmlichen Verfahren nur schwer herstellbar sind. Solche komplexen Krümmungen können sich beispielsweise durch Bereiche mit kleinen Krümmungsradien oder mit starken Änderungen der Krümmung auszeichnen, insbesondere wenn rahmenartige Biegeformen zum Einsatz kommen und die besagten Bereiche weit von den Seitenkanten der Glasscheibe entfernt liegen. In einer vorteilhaften Ausführung weist die gebogene Glasscheibe daher mindestens einen Bereich mit Krümmungsradien kleiner 800 mm auf. Die besagten Krümmungsradien treten bevorzugt mit einem Abstand von den Seitenkanten der Glasscheibe von mindestens 100 mm auf. Das heißt, die Bereiche mit starker Krümmung sind zumindest teilweise in einem Bereich der Glasscheibe angeordnet, der mindestens 100 mm von den Seitenkanten der Glasscheibe beabstandet ist. Der Bereich kann ein Durchsichtsbereich der Glasscheibe sein oder auch durch beispielsweise einen Abdeckdruck opak gestaltet sein. Die besagten Bereiche mit starker Krümmung sind diejenigen, welche mit dem Laser zusätzlich erwärmt werden. Die Größe des laserbestrahlten Bereichs und die Temperaturänderung, die erforderlich sind, um eine gewünschte Biegung zu erreichen, können vom Fachmann durch Simulationen ermittelt werden.

Die Erfindung umfasst die Verwendung eines Lasers zum lokalen Erwärmen von Glasscheiben im Rahmen von Glasbiegeverfahren. Dabei wird ein Bereich einer mittels Heizmittel im Wesentlichen gleichmäßig vorgewärmten Glasscheibe durch die Laserstrahlung weiter erwärmt, bevor die Glasscheibe mittels mindestens einer Biegeform gebogen wird.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen Querschnitt durch eine Ausgestaltung der Vorrichtung während eines ersten Teils des erfindungsgemäßen Verfahrens,
- Fig. 2: einen Querschnitt durch die Vorrichtung aus Fig. 1 während eines daran anschließenden zweiten Teils des erfindungsgemäßen Verfahrens,
- Fig. 3: einen Querschnitt durch eine weitere Ausgestaltung der Vorrichtung,
- Fig. 4: einen Querschnitt durch eine erfindungsgemäß gebogene Glasscheibe,
- Fig. 5: eine Draufsicht auf die Glasscheibe aus Fig. 4.

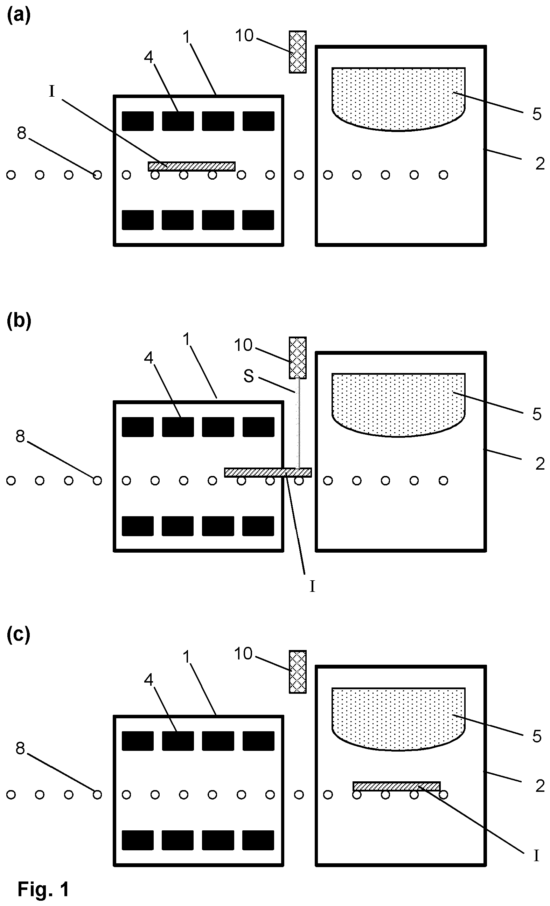

Figur 1 zeigt eine Vorrichtung während eines ersten Teils eines erfindungsgemäßen Verfahrens zum Biegen einer Glasscheibe I.

Die Vorrichtung umfasst eine Heizkammer 1, in der Heizmittel 4 angeordnet sind, welche als Heizstrahler ausgebildet sind. Die Vorrichtung umfasst außerdem eine Biegekammer 2, in der eine obere Biegeform 5 eingebaut ist. Die Biegeform 5 weist eine vollflächige, konvexe Wirkfläche auf. Die Vorrichtung umfasst außerdem ein Rollenfördersystem 8, das durch die Heizkammer 1 hindurch verläuft und in die Biegekammer 2 hinein. Die Vorrichtung umfasst außerdem einen Laser 10 (CO₂-Laser, 10,6 µm, Dauerstrichbetrieb), der zwischen der Heizkammer 1 und der Biegekammer 2 auf das Rollenfördersystem 8 gerichtet ist.

Die im Ausgangszustand plane Glasscheibe I wird direkt auf dem Rollenfördersystem 8 positioniert und in einer kontinuierlichen Bewegung (in der Abbildung von links kommend) in die Heizkammer 1 hinein, durch diese hindurch und anschließend in die Biegekammer 2 hinein bewegt. In der Heizkammer 1 wird die Glasscheibe I dabei durch die Heizmittel 4 im Wesentlichen gleichmäßig erwärmt, beispielsweise auf eine Temperatur von etwa 650 °C (Fig. 1a). Die Heizmittel 4 sind in der Heizkammer 1 oberhalb und unterhalb des Rollenfördersystems 8 angeordnet, um beide Oberflächen der Glasscheibe I simultan zu bestrahlen.

Zwischen der Heizkammer 1 und der Biegekammer 2 wird ein Bereich der Glasscheibe I durch den Laser 10 bestrahlt (Fig. 1b). Der Bereich der Glasscheibe I wird dadurch weiter erwärmt, beispielsweise um 20 °C. Er wird dadurch mit einer besonderen Biegbarkeit versehen. Die Strahlung S des Lasers 10 kann dazu beispielsweise mit einem nicht dargestellten Laserscansystem orthogonal zur Förderrichtung des Rollenfördersystems 8 bewegt werden und so die gesamte Breite des Bereichs abdecken. Durch den Vorschub des Rollenfördersystems 8 wird sichergestellt, dass der Bereich entlang seiner gesamten Länge in den Wirkbereich des Lasers 10 gerät. Dadurch wird sichergestellt, dass der gesamte zu erwärmende Bereich der Glasscheibe I mit Laserstrahlung S beaufschlagt wird. Die Fördergeschwindigkeit des Rollenfördersystems beträgt beispielsweise 450 mm/s, die Scangeschwindigkeit der Laserstrahlung S beispielsweise 10 mm/s. Die Ausgangsleistung des Lasers 10 beträgt beispielsweise 5 kW und die Ausdehnung der Laserstrahlung S auf der Glasscheibe I beispielsweise 625 mm².

Nach der Bestrahlung durch den Laser 10 wird die Glasscheibe I vom Rollenfördersystem 8 in die Biegekammer 2 transportiert, bis sie unterhalb der Biegeform 5 angelangt ist (Fig. 1c).

Die Vorrichtung ist für ein kontinuierliches Biegeverfahren ausgelegt. Sie kann bereits die nächste zu biegende Glasscheibe in die Heizkammer transportieren, wenn die vorherige Glasscheibe I in der Biegekammer 2 angelangt ist, was aber der Einfachheit halber nicht dargestellt ist. Der Abstand aufeinanderfolgender Glasscheiben I hängt insbesondere von der Taktzeit der Biegung in die Biegekammer 2 ab.

Alternativ zu der dargestellten Ausgestaltung kann der Laser auch in die Heizkammer 1 oder in die Biegekammer 2 hinein gerichtet sind. Die Heizkammer 1 beziehungsweise Biegekammer 2 müssen dabei über ein für die Laserstrahlung transparentes Fenster oder eine Öffnung verfügen.

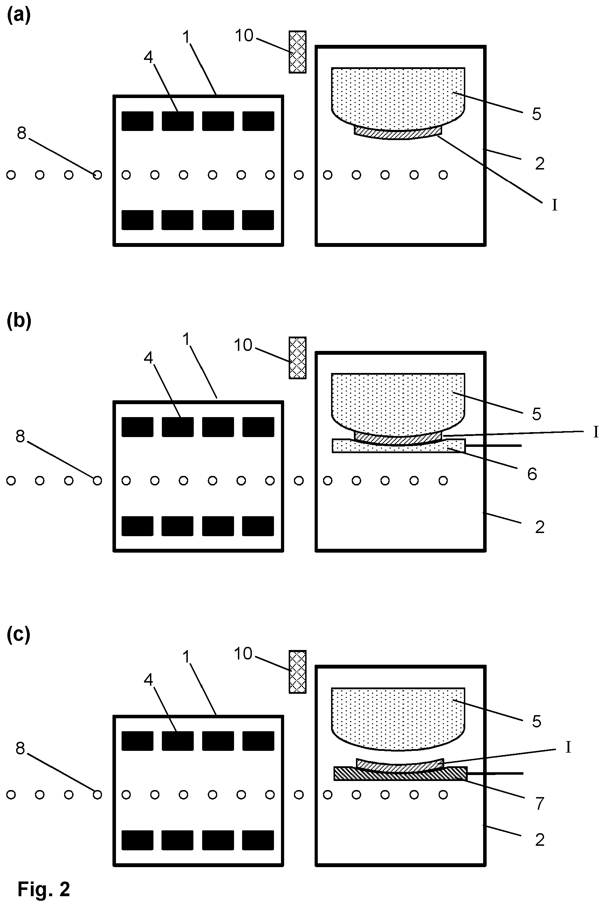

Figur 2 zeigt die Vorrichtung aus Fig. 1 während eines zweiten Teils des Verfahrens, in Fortsetzung der Fig. 1. Die Glasscheibe I ist durch einen von unten durch die Rollen des Rollenfördersystems 8 hindurchtretenden Luftstrom an die obere Biegeform 5 angeblasen worden, was durch eine Saugwirkung durch Öffnungen in der Wirkfläche der Biegeform 5 unterstützt wird (Fig. 2a). Nun wird mittels eines Kettenzugsystems oder beweglicher Zylinder eine untere Biegeform 6 unter die obere Biegeform 5 bewegt und die Glasscheibe I wird zwischen der oberen Biegeform 5 und der untere Biegeform 6 gepresst (Fig. 2b). Hierzu wird die obere Biegeform 5 auf die untere Biegeform 6 mit der Glasscheibe I abgesenkt. Die untere Biegeform 6 weist eine rahmenartige konkave Wirkfläche auf, die zur konvexen Wirkfläche der oberen Biegeform 5 komplementär ist. Durch das Pressen zwischen den Biegeformen 5, 6 wird die Glasscheibe I in die gewünschte Form gebogen. Anschließend wird die untere Biegeform 6 wieder entfernt und es wird ein Vorspannrahmen 7 mit einer rahmenartigen Auflagefläche unter die Glasscheibe I bewegt. Durch Unterbrechung des Blas- und Saugwirkung wird die Glasscheibe I von der oberen Biegeform 5 gelöst und auf dem Vorspannrahmen 7 abgelegt (Fig. 2c). Die Glasscheibe I wird in der Folge mit dem Vorspannrahmen 7 aus der Biegekammer entnommen und einer Vorspannvorrichtung zugeführt, wo sie durch schnelle Abkühlung mittels eines starken Gasstroms, insbesondere Luftstroms thermisch vorgespannt wird.

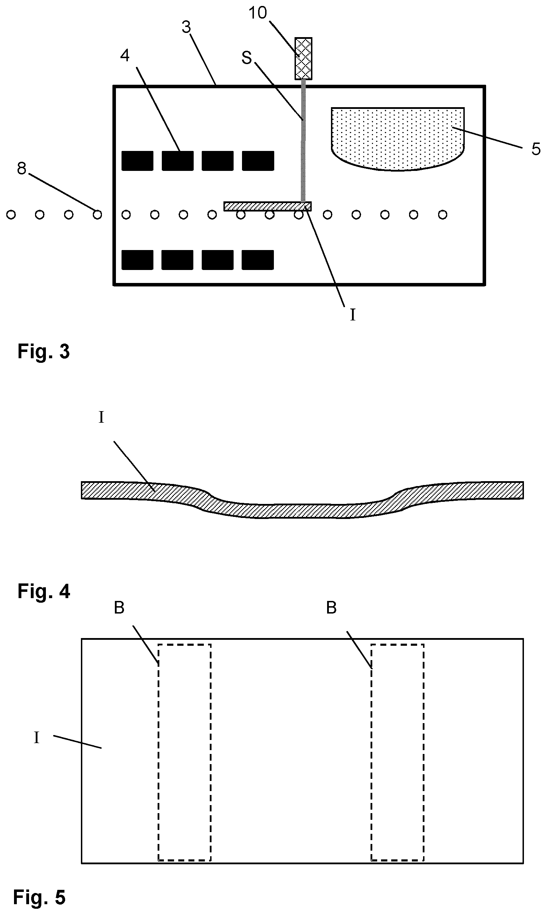

Figur 3 zeigt eine weitere Ausgestaltung der Vorrichtung. Im Gegensatz zu der Ausgestaltung der Figuren 1 und 2 weist die Vorrichtung Heizkammer 1 und Biegekammer 2 auf, die voneinander getrennt sind. Stattdessen sind die Heizmittel 4 und die Biegeform 5 in einer kombinierten Heiz- und Biegekammer 3 angeordnet. Die Heizmittel 4 sind dabei in Förderrichtung des Rollenfördersystems 8 vor der Biegeform 5 angeordnet, so dass die Glasscheibe I zunächst die Heizmittel 4 durchläuft, bevor sie an der Biegeform 5 angelangt. Der Laser 10 ist außerhalb der kombinierten Heiz- und Biegekammer 3 angeordnet und in diese hinein gerichtet. Die Strahlung S des Lasers 10 tritt durch ein transparentes Fenster oder eine Öffnung in die Heiz- und Biegekammer 3 ein, wo sie auf die Glasscheibe I trifft. Heizmittel 4, Biegeform 5 und Laser 10 sind wie in Fig. 1 ausgestaltet.

Figur 4 und Figur 5 zeigen eine Glasscheibe I mit einer komplexen Krümmung, die mit dem erfindungsgemäßen Verfahren realisiert werden kann. Die Glasscheibe I weist zwei Teilbereiche B auf, die stark gekrümmt sind und zudem durch eine starke Krümmungsänderung gekennzeichnet sind. Der minimale Krümmungsradius beträgt 150 mm. Außerhalb der Bereich B ist die Glasscheibe I weniger stark gekrümmt mit Krümmungsradien, wie sie für Fahrzeugverglasungen üblich sind. Da sich die Bereiche B über den Durchsichtsbereich der Glasscheibe I erstrecken und damit nicht durch die rahmenartige untere Biegeform 6 kontaktiert werden, ist die komplexe Form mit herkömmlichen Verfahren nur schwer zu erzeugen. Mit einer vollflächigen unteren Biegeform 6 wäre die Form zwar realisierbar, jedoch würde dadurch die optische Qualität der Glasscheibe I deutlich herabgesetzt.

Gemäß der vorliegenden Erfindung werden die Teilbereiche B durch den Laser 10 zusätzlich erwärmt, wodurch sie mit einer gesteigerten Formbarkeit versehen werden. Die komplexe Form ist nun auch mit der rahmenartigen unteren Biegeform 6 realisierbar.

### Beispiel

Eine Glasscheibe I (Kalk-Natron-Glas, 4 mm Dicke) wie in den Figuren 4 und 5 dargestellt und beschrieben wurde gebogen mit einer Vorrichtung wie in den Figuren 1 und 2 dargestellt und beschrieben. Anschließend wurde die maximale absolute Abweichung Δx der tatsächlichen Scheibenform von der eigentlich gewünschten Geometrie bestimmt. Für das Vergleichsbeispiel wurde die gleiche Vorrichtung verwendet, nur ohne den Laser 10. Ansonsten wurden dieselben Biegeformen 5, 6 und dieselben Einstellungen verwendet.

**Tabelle 1**

| | Δx |
|---|---|
| Beispiel | 3,3 mm |
| Vergleichsbeispiel | 6,5 mm |

In Tabelle 1 ist zu erkennen, dass das erfindungsgemäße Verfahren mit lokaler Laserbestrahlung zu einer deutlich verbesserten Biegung geführt hat: die Abweichungen von der angestrebten Geometrie waren signifikant geringer als beim Vergleichsbeispiel. Dieses Ergebnis war für den Fachmann unerwartet und überraschend.

### Bezugszeichenliste:

- (1): Heizkammer
- (2): Biegekammer
- (3): kombinierte Heiz- und Biegekammer
- (4): Heizmittel
- (5): Biegeform / obere Biegeform
- (6): untere Biegeform
- (7): Vorspannrahmen
- (8): Rollenfördersystem
- (10): Laser

- (I): Glasscheibe
- (S): Strahlung des Lasers 10
- (B): Teilbereich der Glasscheibe I

## Patentansprüche

1. Verfahren zum Biegen einer Glasscheibe (I), umfassend die folgenden Verfahrensschritte:
(a) Im Wesentlichen gleichmäßiges Erwärmen einer Glasscheibe (I) durch Heizmittel (4) mindestens auf ihre Erweichungstemperatur,
(b) Weiteres lokales Erhöhen der Temperatur nur in einem oder mehreren Teilbereichen (B) der Glasscheibe (I) mittels eines Lasers (10),
(c) Biegen der Glasscheibe (I) mittels eines Kontaktmittels zum Formen der Glasscheibe (I).

2. Verfahren nach Anspruch 1, wobei die Zeitspanne zwischen den Verfahrensschritten (b) und (c) höchstens 10 s beträgt, bevorzugt höchstens 5 s.

3. Verfahren nach Anspruch 1 oder 2, wobei die Temperatur des oder der mehreren Teilbereiche (B) in Verfahrensschritt (b) um mindestens 5 °C erhöht wird, bevorzugt um mindestens 15 °C.

4. Verfahren nach einem der Ansprüche 1 bis 3, wobei die Glasscheibe (I) mittels eines Rollenfördersystems (8) oder Bandfördersystems in einer kontinuierlichen Bewegung den Heizmitteln (4) und dem Kontaktmittel zugeführt wird.

5. Verfahren nach Anspruch 4, wobei die Strahlung des Lasers (4) mit einem Laserscansystem quer, bevorzugt orthogonal, zur Förderrichtung des Rollenfördersystems (8) oder Bandfördersystems bewegt wird, um die gesamte Breite des Teilbereichs (B) zu bestrahlen.

6. Verfahren nach einem der Ansprüche 1 bis 5, wobei der oder die mehreren Teilbereiche (B) der Glasscheibe (I) in Verfahrensschritt (c) mit einem Krümmungsradius kleiner 800 mm versehen werden.

7. Verfahren nach Anspruch 6, wobei mindestens eine Biegeform (5, 6) mit einer rahmenartigen Wirkfläche zum Einsatz kommt und wobei der besagte Krümmungsradius mit einem Abstand von den Seitenkanten der Glasscheibe (I) von mindestens 100 mm auftritt.

8. Verfahren nach einem der Ansprüche 1 bis 7, wobei die Heizmittel (4) in einer Heizkammer (1) angeordnet sind und das Kontaktmittel zum Formen der Glasscheibe (I) in einer Biegekammer (2); und wobei der Laser (10) außerhalb der Heizkammer (1) und außerhalb der Biegekammer (2) angeordnet ist und in die Heizkammer (1), in die Biegekammer (2) oder zwischen die Heizkammer (1) und die Biegekammer (2) gerichtet ist.

9. Verfahren nach einem der Ansprüche 1 bis 7, wobei die Heizmittel (4) und das Kontaktmittel zum Formen der Glasscheibe (I) in einer kombinierten Heiz- und Biegekammer (3) angeordnet sind; und wobei der Laser (10) außerhalb der Heiz- und Biegekammer (3) angeordnet ist und in die Heiz- und Biegekammer (3) gerichtet ist.

10. Verfahren nach einem der Ansprüche 1 bis 9, wobei der Laser (10) eine Emissionswellenlänge von 500 nm bis 20 µm aufweist, bevorzugt von 5 µm bis 15 µm.

## Claims

1. Method for bending a glass pane (I), comprising the following steps:
(a) Heating a glass pane (I) substantially uniformly by means of heating means (4) to at least its softening temperature,
(b) Further locally increasing the temperature only in one or more partial areas (B) of the glass pane (I) by means of a laser (10),
(c) Bending the glass pane (I) by means of a contact means for shaping the glass pane (I).

2. Method according to claim 1, wherein the time span between process steps (b) and (c) is at most 10 seconds, preferably at most 5 seconds.

3. Method according to claim 1 or 2, wherein the temperature of the one or more partial areas (B) is increased by at least 5 °C in process step (b), preferably by at least 15 °C.

4. Method according to one of claims 1 to 3, wherein the glass pane (I) is fed to the heating means (4) and the contact means in a continuous movement by means of a roller conveyor system (8) or belt conveyor system.

5. Method according to claim 4, wherein the radiation of the laser (4) is moved with a laser scanning system transversely, preferably orthogonally, to the conveying direction of the roller conveyor system (8) or belt conveyor system in order to irradiate the entire width of the partial area (B).

6. Method according to one of claims 1 to 5, wherein the one or more partial areas (B) of the glass pane (I) are provided with a radius of curvature of less than 800 mm in process step (c).

7. Method according to claim 6, wherein at least one bending mould (5, 6) with a frame-like effective surface is used and wherein the said radius of curvature occurs at a distance of at least 100 mm from the side edges of the glass pane (I).

8. Method according to one of claims 1 to 7, wherein the heating means (4) are arranged in a heating chamber (1) and the contact means for forming the glass pane (I) are arranged in a bending chamber (2); and wherein the laser (10) is arranged outside the heating chamber (1) and outside the bending chamber (2) and is directed into the heating chamber (1), into the bending chamber (2) or between the heating chamber (1) and the bending chamber (2).

9. Method according to one of claims 1 to 7, wherein the heating means (4) and the contact means for forming the glass pane (I) are arranged in a combined heating and bending chamber (3); and wherein the laser (10) is arranged outside the heating and bending chamber (3) and is directed into the heating and bending chamber (3).

10. Method according to one of claims 1 to 9, wherein the laser (10) has an emission wavelength of 500 nm to 20 µm, preferably from 5 µm to 15 µm.

## Revendications

1. Procédé pour courber une vitre (I), comprenant les étapes suivantes:
(a) chauffer une vitre (I) de manière sensiblement uniforme à l'aide d'un moyen de chauffage (4) jusqu'à au moins sa température de ramollissement,
(b) augmenter encore localement la température uniquement dans une ou plusieurs zones partielles (B) de la vitre (1) à l'aide d'un laser (10),
(c) cintrage de la vitre (I) à l'aide d'un moyen de contact pour façonner la vitre (I).

2. Procédé selon la revendication 1, dans lequel l'intervalle de temps entre les étapes de procédé (b) et (c) est d'au plus 10 secondes, de préférence d'au plus 5 secondes.

3. Procédé selon la revendication 1 ou 2, dans lequel la température de la ou des zones partielles (B) est augmentée d'au moins 5 °C dans l'étape de procédé (b), de préférence d'au moins 15 °C.

4. Procédé selon l'une des revendications 1 à 3, dans lequel la vitre (I) est acheminée vers le moyen de chauffage (4) et le moyen de contact dans un mouvement continu au moyen d'un système de convoyeur à rouleaux (8) ou d'un système de convoyeur à bande.

5. Procédé selon la revendication 4, dans lequel le rayonnement du laser (4) est déplacé avec un système de balayage laser transversalement, de préférence orthogonalement, par rapport à la direction de transport du système de convoyage à rouleaux (8) ou du système de convoyage à bande afin d'irradier toute la largeur de la zone partielle (B).

6. Procédé selon l'une des revendications 1 à 5, dans lequel la ou les zones partielles (B) de la vitre (I) sont pourvues d'un rayon de courbure inférieur à 800 mm dans l'étape de traitement (c).

7. Procédé selon la revendication 6, dans lequel au moins un moule de cintrage (5, 6) avec une surface effective en forme de cadre est utilisé et dans lequel ledit rayon de courbure se produit à une distance d'au moins 100 mm des bords latéraux de la vitre (I).

8. Procédé selon l'une des revendications 1 à 7, dans lequel les moyens de chauffage (4) sont disposés dans une chambre de chauffage (1) et les moyens de contact pour former la vitre (I) sont disposés dans une chambre de cintrage (2) ; et dans lequel le laser (10) est disposé à l'extérieur de la chambre de chauffage (1) et à l'extérieur de la chambre de cintrage (2) et est dirigé dans la chambre de chauffage (1), dans la chambre de cintrage (2) ou entre la chambre de chauffage (1) et la chambre de cintrage (2).

9. Procédé selon l'une des revendications 1 à 7, dans lequel les moyens de chauffage (4) et les moyens de contact pour former la vitre (I) sont disposés dans une chambre combinée de chauffage et de cintrage (3) ; et dans lequel le laser (10) est disposé à l'extérieur de la chambre de chauffage et de cintrage (3) et est dirigé vers la chambre de chauffage et de cintrage (3).

10. Procédé selon l'une des revendications 1 à 9, dans lequel le laser (10) a une longueur d'onde d'émission de 500 nm à 20 µm, de préférence de 5 µm à 15 µm.
